# EUROPÄISCHE PATENTANMELDUNG

(11) **EP 4 502 397 A1**
(43) Veröffentlichungstag der Anmeldung: **05.02.2025**
(21) Anmeldenummer: 24191751.7
(22) Anmeldetag: 30.07.2024
(51) Int. Cl.: F15B 13/044, F16K 31/04, F16K 31/54

(54) **ELEKTROMECHANISCHER AKTUATOR UND AKTUATOR-VENTIL-EINHEIT**

(30) Priorität: 02.08.2023 DE 102023120489; 29.07.2024 DE 102024121467
(71) Anmelder: Thomas Magnete GmbH, 57562 Herdorf (DE)
(72) Erfinder: Heidebrecht, Artur, 57520 Daaden (DE); Engelberth, Martin, 57567 Daaden (DE)

(57) **Zusammenfassung**

Die Erfindung betrifft einen Elektromechanischer Aktuator (1), aufweisend einen Rotor (2); einen Stator (3), welcher eine Aussparung (4) aufweist; und zumindest ein Schieberelement (5), welches mit dem Rotor (2) wirkverbunden ist und durch eine Rotation des Rotors (2) bewegt wird, wobei das Schieberelement (5) im Betrieb und/oder Ruhezustand des Aktuators (1) entlang einer Radialrichtung (6) des Stators (3) zumindest teilweise in die Aussparung (4) ragt. Die Erfindung betrifft außerdem eine Aktuator-Ventil-Einheit (100) aufweisend ein Ventil (101) und den elektromechanischen Aktuator (1).

## Beschreibung

Die Erfindung betrifft einen elektromechanischen Aktuator sowie eine Aktuator-Ventil-Einheit.

Herkömmliche Aktuatoren, insbesondere Antriebsvorrichtungen für Steuerschieber von hydraulischen Ventilen, wie etwa aus DE 10 2007 031 429 A1 bekannt, weisen einen Rotor und einen Stator als Komponenten einer elektrischen Maschine auf. Dabei wird eine rotatorische Bewegung des Motors üblicherweise in eine lineare Bewegung des Steuerschiebers um einen gewissen Hub umgesetzt. Der Motor, also Rotor und Stator, sitzt außerhalb des Bewegungsraums des Schiebers. In einer herkömmlichen länglichen Anordnung muss der Motor um den Hub des Schiebers nach hinten, also mit größerem Abstand zu einer Verbindungsfläche zwischen Schieber und Ventil bzw. entlang einer Hubrichtung des Schiebers, versetzt sein. Bei einer vertikalen Anordnung, wie in der DE 10 2007 031 429 A1 dargestellt, muss der Motor oberhalb, also mit größerem Abstand entlang einer Höhenerstreckung senkrecht zur Längserstreckung/Hubrichtung des Schiebers, vom Schieber, genauer oberhalb vom Schieber entlang seines gesamten Bewegungsraums angeordnet sein. Diese Anordnungen führen allerdings zu erhöhten Baugrößen der herkömmlichen Aktuatoren. Dadurch ist deren Skalierbarkeit für höhere Anforderungen reduziert. Mit anderen Worten nehmen dadurch die Baugrößen der herkömmlichen Aktuatoren bei höheren Anforderungen an deren Kraft/Hub überproportional zu.

Es ist Aufgabe der Erfindung, einen elektromechanischen Aktuator sowie eine Aktuator-Ventil-Einheit bereitzustellen, welche eine geringere Baugröße und eine vorteilhafte Skalierbarkeit aufweisen.

Die Lösung dieser Aufgabe erfolgt durch die Merkmale der nebengeordneten Ansprüche. Die Unteransprüche haben vorteilhafte Ausführungen der Erfindung zum Inhalt.

Die Lösung dieser Aufgabe erfolgt insbesondere durch einen elektromechanischen Aktuator. Der Aktuator weist einen Rotor, einen Stator und zumindest ein Schieberelement auf. Das Schieberelement ist mit dem Rotor wirkverbunden und wird durch eine Rotation des Rotors bewegt. Der Stator weist eine Aussparung auf, wobei das Schieberelement im Betrieb und/oder im Ruhezustand des Aktuators entlang einer Radialrichtung des Stators zumindest teilweise in die Aussparung des Stators ragt.

Dadurch, dass der Stator eine Aussparung aufweist und das Schieberelement zumindest teilweise und zumindest zeitweise durch die Aussparung ragt, ist eine kompakte Bauform des Aktuators gewährleistet.

In manchen bevorzugten Ausführungsformen weist der Stator als vorgenannte Aussparung einen vollständigen Ausschnitt auf, in welchem der Stator entlang seiner Umfangsrichtung vollständig unterbrochen ist. In bevorzugten alternativen Ausführungsformen ist die vorgenannte Aussparung eine Teil-Aussparung, beispielsweise ein (nicht-vollständiger) Schlitz oder ein (radiales) Durchgangsloch im Stator. Bei der Teil-Aussparung können, entlang der Umfangsrichtung des Stators, verbleibende Strukturen des Stators beispielsweise eingerichtet sein, den Magnetkreis zu schließen, beispielsweise als Stege mit magnetisierbarem Material und/oder als eine Grundplatte mit magnetisierbarem Material, und/oder für eine höhere strukturelle Stabilität des Stators zu sorgen, beispielsweise als Versteifungsstrukturen, welche ebenfalls beispielsweise magnetisierbares Material aufweisen.

Das Schieberelement ragt, wie vorstehend erläutert, "entlang einer Radialrichtung des Stators in die Aussparung des Stators". In diesem Zusammenhang ist eine Radialrichtung des Stators als eine Richtung (bzw. viele Richtungen) definiert, welche von innen nach außen des Stators verläuft. Das Schieberelement erstreckt sich hierbei entlang einer Radialrichtung, sodass das Schieberelement von innen nach außen (des Stators) zur Aussparung ragt. In diesem Zusammenhang schließt "entlang einer Radialrichtung" alle Richtungen ein, welche von innen nach außen des Stators verlaufen, insbesondere Richtungen, welche parallel oder koaxial zu Radien und von innen nach außen des Stators verlaufen.

Beispielsweise ist das Schieberelement in manchen Ausführungsformen von dem Mittelpunkt des Stators versetzt angeordnet, bildet also beispielsweise eine Sekante mit einem Umfang des Stators.

In manchen Ausführungsformen ragt das Schieberelement in Radialrichtung zumindest teilweise in die Aussparung. Mit anderen Worten ist das Schieberelement in solchen Beispielen koaxial mit einem Radius des Stators ausgerichtet.

Das Schieberelement ragt vorzugsweise im Ruhezustand und im Betrieb des Aktuators entlang einer Radialrichtung des Stators zumindest teilweise in die Aussparung.

In einer vorteilhaften Ausführungsform ist der Stator mit Bezug auf eine Rotationsachse des Rotors rotations-asymmetrisch. Dabei ist der Stator vorteilhafterweise bis auf das Vorhandensein der Aussparung rotations-symmetrisch mit Bezug auf die Rotationsachse des Rotors. Bevorzugt ist der Stator im Wesentlichen ringförmig, insbesondere Kreisringförmig, wobei die Aussparung vorteilhafterweise schlitzförmig ist, sodass der Stator insgesamt im Wesentlichen Schlitzringförmig ist. Vorteilhafterweise kann dadurch der Stator leicht an Anforderungen an das Schieberelement, beispielsweise Dicke oder Länge des Schieberelements, durch Anpassen der Größe der Aussparung bzw. des Schlitzes, angepasst werden.

Vorzugsweise ist der Rotor mit Bezug auf seine Rotationsachse rotationsymmetrisch. Dabei ist der Rotor vorteilhafterweise kreisförmig. Insbesondere weist der Rotor vorteilhafterweise keine Aussparung auf, welche äquivalent zur Aussparung des Stators ist oder an einer mit Bezug auf den Stator äquivalenten Stelle des Rotors (im Ruhezustand) gebildet ist. Vorteilhafterweise weist der Rotor keine Aussparung auf, in welche das Schieberelement im Ruhezustand oder im Betrieb des Aktuators ragt. Dies hat einen besonders vorteilhaften Effekt, dass Kräfte und daraus resultierende Vibrationen und/oder Geräusche, welche durch das Rotieren des Rotors verursacht werden können, durch die symmetrische Ausgestaltung des Rotors möglichst einfach unterdrückt oder vermieden werden können.

In einer vorteilhaften Ausführungsform weist der Stator eine Mehrzahl von Statorzähnen auf. Dabei sind die Statorzähne entlang einer Umfangsrichtung des Stators gleichmäßig verteilt, wobei der Stator keinen Statorzahn in der Aussparung aufweist. Mit anderen Worten ist die Aussparung vorteilhafterweise eine Auslassung zumindest eines Statorzahns. Dadurch ist eine besonders einfache Herstellung des Stators gewährleistet, da hierbei lediglich ein oder mehrere Statorzähne weggelassen werden müssen.

In einer vorteilhaften Ausführungsform weist der Aktor eine Grundplatte auf. Bevorzugt sind dabei die Statorzähne auf der Grundplatte angeordnet. Die Grundplatte ist dabei eingerichtet, die Statorzähne zu halten und weist in manchen Ausführungsformen hierfür Haltestrukturen auf. Die Grundplatte ist vorzugsweise ringförmig. Bevorzugt ist die Grundplatte Teil des Stators. In alternativen Ausführungsformen ist die Grundplatte Teil eines Gehäuses oder beispielsweise Teil des vorgenannten Rotors oder eines weiteren Rotors.

Die Grundplatte ist vorzugsweise dazu eingerichtet, einen Magnetkreis der Statorzähne zu schließen.

In einer weiteren vorteilhaften Ausführungsform ist eine Verbindung zwischen dem Rotor und dem Schieberelement eingerichtet, eine Rotation des Rotors im Betrieb des Aktuators in eine radiale Hin- und Herbewegung des Schieberelements durch die Aussparung umzusetzen. Dadurch ist ein Hub, insbesondere eine translatorische Bewegung, des Schieberelements zumindest teilweise vorteilhafterweise radial innerhalb des Stators, sodass eine kompakte Baugröße des Aktuators erzielt wird. Eine radiale Hin- und Herbewegung beziehungsweise ein radialer Hub des Schieberelements ist in diesem Zusammenhang eine Bewegung/Hub des Schieberelements, welche von innen nach außen des Stators (Hinbewegung) und von außen nach innen des Stators (Herbewegung) verläuft. Diese muss nicht zwangsläufig, kann aber, koaxial mit einem Radius des Stators verlaufen.

In einer alternativen vorteilhaften Ausgestaltung ist eine Verbindung zwischen dem Rotor und dem Schieberelement eingerichtet, eine Rotation des Rotors im Betrieb des Aktuators in eine Hin- und Herbewegung des Schieberelements durch die Aussparung umzusetzen, welche senkrecht zur Radialrichtung ist. Dabei kann die Verbindung vorteilhafterweise eine Hin- und Herbewegung des Schieberelements entlang der Umfangsrichtung des Stators bewirken. Alternativ oder zusätzlich dazu kann die Verbindung vorteilhafterweise eine Hin- und Herbewegung des Schieberelements entlang einer Longitudinalrichtung des Stators bewirken, wobei die Longitudinalrichtung des Stators senkrecht zur Radialrichtung, senkrecht zur Umfangsrichtung und vorzugsweise parallel zur Rotationsachse des Rotors ist. Für diese vorteilhaften Ausgestaltungen weist der Aktuator beispielsweise eine Umlenkung, insbesondere mittels eines Umlenkgetriebes, auf. Dadurch ist der Aktuator vorteilhafterweise in einer Vielzahl von Anwendungen einsetzbar.

In der vorteilhaften Ausführungsform mit der bewirkten radialen Hin- und Herbewegung des Schieberelements weist der Rotor vorzugsweise ein Rotor-Zahnrad auf. Dabei weist das Schieberelement eine Zahnstange auf, welche mit dem Rotor-Zahnrad verbunden ist. Dadurch wird eine Rotation des Rotors in eine Rotation des Rotor-Zahnrades in kompakter und einfacher Art und Weise umgesetzt.

In einer vorteilhaften Ausgestaltung greifen Zähne der Zahnstange des Schieberelements direkt in Zähne des Rotor-Zahnrades, sodass die Zahnstange durch eine Rotation des Rotors entlang einer Radialrichtung, insbesondere koaxial mit einem Radius, durch die Aussparung des Stators hin- und herbewegt wird. Dadurch ist eine besonders kompakte und einfache Bauweise der Verbindung zwischen Rotor und Schieberelement erreicht.

In bevorzugten Ausführungen ist die Zahnstange des Schieberelements mittels eines Getriebes mit dem Rotor-Zahnrad verbunden. Hierbei können, insbesondere in Abhängigkeit von Anforderungen beispielsweise an eine Umlenkung der Hubrichtung, verschiedene Arten von Getriebe, insbesondere Zahnradgetriebe eingesetzt werden. Vorteilhaft sind insbesondere Stirnradgetriebe und Planetengetriebe.

In manchen bevorzugten Ausführungsformen, in welchen das Getriebe beispielhaft ein Stirnradgetriebe ist, ist ein solches Stirnradgetriebe als mehrstufiges Stirnradgetriebe ausgebildet.

In einer alternativen vorteilhaften Ausgestaltung ist die Zahnstange des Schieberelements mittels eines Planetengetriebes mit dem Rotor-Zahnrad verbunden. Mit anderen Worten weist der Aktuator ein Planetengetriebe auf, welches das Schieberelement mit dem Rotor verbindet.

In einer besonders vorteilhaften Ausführungsform bilden der Rotor und der Stator eine Radialflussmaschine, in welcher der Rotor radial innerhalb des Stators angeordnet ist. Dabei umschließt der Stator, mit Bezug auf seine Aussparung, den Rotor entlang seiner Umfangsrichtung teilweise. Dies erlaubt eine besonders einfache und insbesondere entlang der Longitudinalrichtung kompakte Bauweise (geringe Höhe) des Aktuators.

Vorteilhafterweise ist die vorgenannte Radialflussmaschine mit der vorteilhaften Ausgestaltung der Verbindung als Planetengetriebe oder als direkte Verbindung des Rotor-Zahnrads mit dem Schieberelement kombiniert.

In der möglichen Kombination der Radialflussmaschine mit dem Planetengetriebe weist der Rotor vorzugsweise eine im Wesentlichen halbgeschlossene hohlzylindrische Form (auch charakterisierbar als Hohlzylinder mit Deckel, ohne Boden), wobei eine Mantelaußenfläche des Rotors Rotor-Magnete hält. Der Rotor weist dabei vorteilhafterweise in seiner radialen Mitte auf seiner Innenseite das Rotor-Zahnrad auf. Mit anderen Worten weist der Rotor dabei das Rotor-Zahnrad radial mittig auf seiner Deckel-Innenfläche auf.

In einer alternativen vorteilhaften Ausführungsform bilden der Rotor und der Stator eine Axialflussmaschine, in welcher der Rotor entlang seiner Rotationsachse auf dem Stator angeordnet ist. Mit anderen Worten ist der Rotor entlang der Longitudinalrichtung des Stators auf dem Stator angeordnet, insbesondere direkt auf dem Stator angeordnet.

Vorteilhafterweise ist die vorgenannte Axialflussmaschine mit der vorteilhaften Ausgestaltung der Verbindung als Planetengetriebe oder als Stirnradgetriebe oder als direkte Verbindung des Rotor-Zahnrads mit dem Schieberelement kombiniert.

Besonders vorteilhaft ist eine Kombination der Axialflussmaschine mit der Ausführung der Verbindung als Stirnradgetriebe, insbesondere mehrstufiges Stirnradgetriebe. Dabei ist besonders vorteilhaft, dass das Stirnradgetriebe, insbesondere vollständig, in dem vom Stator teilweise umschlossenen Raum angeordnet ist. Dadurch wird die Baugröße des gesamten Aktuators reduziert. Des Weiteren wird die Leistungsdichte durch eine mittels des Stirnradgetriebes ermöglichten Anpassung eines Arbeitsbereichs des Aktuators erhöht. Durch Erhöhung der Leistungsdichte kann der Aktuator für höhere Anforderungen eingesetzt werden und/oder bei gleichen Anforderungen mit geringerer Baugröße für einen größeren Anwendungsbereich (kleinere verfügbare Räume) eingesetzt werden.

In besonders vorteilhaften Ausführungsformen weist das mehrstufige Stirnradgetriebe eine Mehrzahl von Stirnrädern auf. Vorteilhafterweise weist das Stirnradgetriebe drei oder mehr oder vier oder mehr Stirnräder auf. In einer vorteilhaften Ausgestaltung ist zumindest eines der Stirnräder ein Doppelzahnrad.

In einer möglichen Kombination der Axialflussmaschine mit der direkten Verbindung zwischen Rotor-Zahnrad und Schieberelement liegt das Rotor-Zahnrad direkt an der Zahnstange des Schieberelements an und greift in diese ein. Dabei ist der Rotor vorteilhafterweise im Wesentlichen scheibenförmig und weist auf einer dem Stator bezüglich seiner Longitudinalrichtung gegenüberliegenden Fläche eine ringförmige Anordnung von Rotor-Magneten auf. Die Rotor-Magnete sind dabei vorteilhafterweise ringplatten-förmig ausgestaltet, also als bezüglich der Longitudinalrichtung dünner Ring ausgebildet. Dabei ragt das Rotor-Zahnrad entlang der Longitudinalrichtung von der dem Stator gegenüberliegenden Fläche in einen von dem Stator umfänglich teilweise umschlossenen Raum, um die in diesen Stator-Raum durch die Aussparung ragende Zahnstange des Schieberelements zu erreichen. Diese Ausgestaltung hat den besonderen Vorteil, dass eine Baugröße des Aktuators insbesondere senkrecht zur Longitudinalrichtung (Länge, Breite) verringert werden kann.

In besonderen Ausführungen sind die Rotor-Magnete als an der Mantelaußenfläche des Rotors befestigte, einzelne plattenförmige Magnete, oder als ringplatten-förmig ausgestaltete Magnete, wie vorstehend erläutert. Alternativ oder zusätzlich dazu kann der Rotor der Radialflussmaschine oder der Axialflussmaschine ein Speichendesign von Rotor-Magneten aufweisen (Rotorpaket mit eingesetzten/vergrabenen Permanentmagneten).

Die Erfindung betrifft außerdem eine Aktuator-Ventil-Einheit, welche die oben genannten Probleme löst. Die Aktuator-Ventil-Einheit weist zumindest ein Ventil und einen elektromechanischen Aktuator gemäß den vorstehenden besonderen Ausgestaltungen auf. Dabei ist das zumindest eine Schieberelement des Aktuators mit dem Ventil, insbesondere jeweils mit einem der Ventile, verbunden.

In den vorstehenden Erläuterungen wurden Ausgestaltungen bezüglich eines Schieberelements und einer Aussparung des Stators erläutert. Es versteht sich, dass der Stator eine Mehrzahl von Aussparungen aufweisen kann, durch welche jeweils ein Schieberelement aus einer Mehrzahl von Schieberelementen ragt. Des Weiteren ist möglich, dass mehrere Schieberelemente gemeinsam in eine einzige Aussparung oder jeweils in eine Aussparung aus einer Mehrzahl von Aussparungen des Stators ragen.

Des Weiteren kann der Stator eine Mehrzahl, insbesondere zwei, Aussparungen aufweisen, welche insbesondere einander bezüglich eines Mittelpunkts des Stators oder bezüglich einer Longitudinalachse des Schieberelements gegenüberliegen. Vorzugsweise ragt das zumindest eine Schieberelement, insbesondere jeweils, im Ruhezustand und/oder im Betrieb des Aktuators entlang der Radialrichtung des Stators zumindest teilweise in die Mehrzahl, insbesondere in beide, der Aussparungen gleichzeitig oder abwechselnd.

Dadurch kann beispielsweise das Schieberelement bei positivem Hub (oder im Ruhezustand) hauptsächlich durch eine Aussparung (wie vorstehend erläutert) ragen und beispielsweise bei negativem Hub durch eine weitere, zweite Aussparung sowie durch die erste Aussparung im Stator ragen. Insbesondere kann dadurch verhindert werden, dass das Schieberelement beim negativen Hub gegen eine Innenumfangsfläche des Stators anschlägt.

Das Schieberelement ragt wie vorstehend erläutert zumindest teilweise im Ruhezustand und/oder im Betrieb des Aktuators in die Aussparung des Stators. Besonders vorteilhaft ist es dabei, wenn der Ruhezustand einen Zustand definiert, in welchem das Schieberelement in einer Mitte seines gesamten vordefinierten Hubs ruht. Bezüglich dieser Mitte des Hubs ist ein positiver Hub von einem radialen Mittelpunkt des Stators in Richtung der Aussparung des Stators definiert, während ein negativer Hub in Richtung von der Aussparung des Stators zum Mittelpunkt des Stators definiert ist (entgegen der Radialrichtung, also von außen nach innen). Der positive Hub und der negative Hub müssen nicht gleich lang sein. Mit anderen Worten muss das Schieberelement im Ruhezustand nicht in der Mitte seines gesamten Hubs ruhen, sondern ruht vorzugsweise an einer Stellung definiert durch null positive Hub und null negativen Hub (± 0 mm Hub).

Dabei kann der negative Hub des Schieberelements beispielsweise bis kurz vor einer Umfangsseite des Stators reichen, welche der Aussparung gegenüberliegt. Vorteilhafterweise bedeutet hierbei "kurz vor" eine Erstreckung des negativen Hubs bis mindestens 70% des Radius vom Statormittelpunkt zur entsprechenden Seite (gegenüberliegend zur Aussparung), vorteilhafterweise mindestens 80%, vorteilhaft mindestens 90% oder mindestens 95% des Radius. Dadurch kann ein großer Teil des Hubs des Schieberelements innerhalb des Statorraums stattfinden, sodass eine besonders kompakte Bauform des Aktuators gewährleistet ist. Wie vorstehend erläutert kann der Stator eine weitere Aussparung (eine zweite Aussparung) aufweisen, welche mit Bezug auf den Statormittelpunkt oder mit Bezug auf die Longitudinalachse des Schieberelements der vorstehend erläuterten (ersten) Aussparung am Statorumfang gegenüberliegt. Dabei ist dann eine Erstreckung des negativen Hubs bis gleich oder mehr als 100% des Radius vom Statormittelpunkt möglich. Beispielsweise kann der negative Hub bis zu 105%, bevorzugt 110% oder mehr des Radius reichen.

Weitere Einzelheiten, Vorteile und Merkmale der vorliegenden Erfindung ergeben sich aus nachfolgender Beschreibung von Ausführungsbeispielen anhand der Zeichnung. Es zeigt:
- Fig. 1: eine Explosionsdarstellung eines elektromechanischen Aktuators gemäß einer ersten Ausführungsform der vorliegenden Erfindung;
- Fig. 2: eine perspektivische Schnittansicht des elektromechanischen Aktuators gemäß der ersten Ausführungsform der vorliegenden Erfindung;
- Fig. 3: eine weitere perspektivische Schnittansicht des elektromechanischen Aktuators gemäß der ersten Ausführungsform der vorliegenden Erfindung;
- Fig. 4: eine Explosionsdarstellung eines elektromechanischen Aktuators gemäß einer zweiten Ausführungsform der vorliegenden Erfindung;
- Fig. 5: eine perspektivische Schnittansicht des elektromechanischen Aktuators gemäß der zweiten Ausführungsform der vorliegenden Erfindung;
- Fig. 6: eine weitere perspektivische Schnittansicht des elektromechanischen Aktuators gemäß der zweiten Ausführungsform der vorliegenden Erfindung;
- Fig. 7: eine Explosionsdarstellung eines elektromechanischen Aktuators gemäß einer dritten Ausführungsform der vorliegenden Erfindung;
- Fig. 8: eine perspektivische Schnittansicht des elektromechanischen Aktuators gemäß der dritten Ausführungsform der vorliegenden Erfindung;
- Fig. 9: eine weitere Schnittansicht des elektromechanischen Aktuators gemäß der dritten Ausführungsform der vorliegenden Erfindung; und
- Fig. 10: ein schematisches Blockdiagramm einer Aktuator-Ventil-Einheit gemäß einer Ausführungsform der vorliegenden Erfindung.

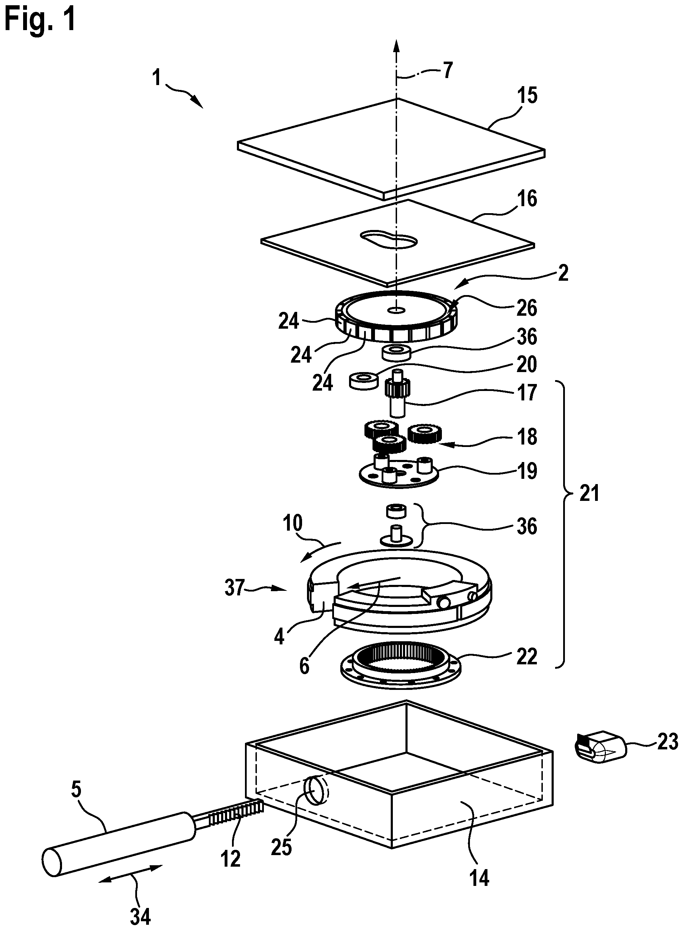

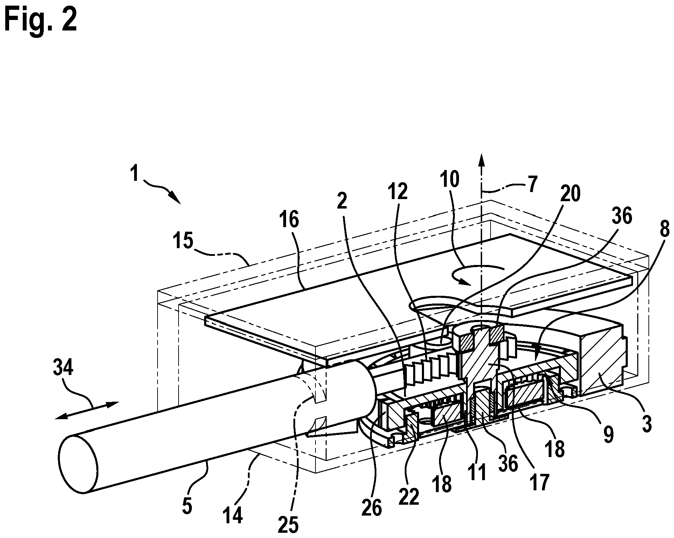

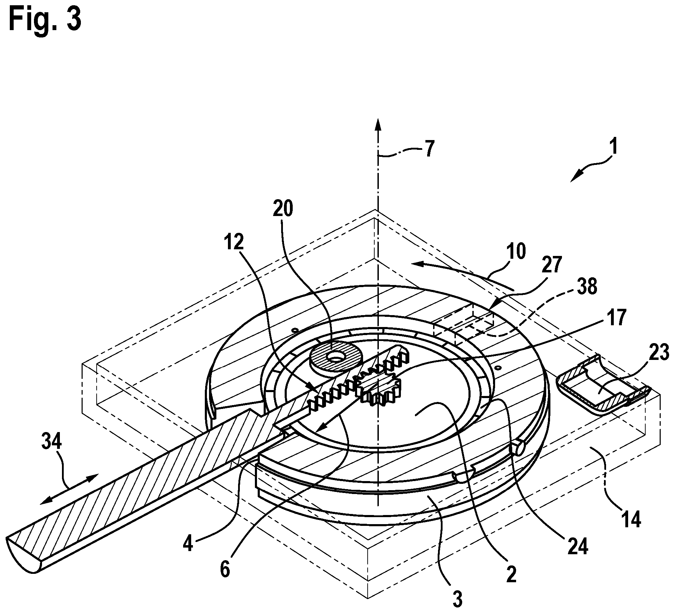

Fig. 1 zeigt eine Explosionsdarstellung eines elektromechanischen Aktuators 1 (nachfolgend "Aktuator 1") gemäß einer ersten Ausführungsform der vorliegenden Erfindung. Die Figuren 2 und 3 zeigen Schnittdarstellung von zusammengebauten Zuständen des Aktuators 1 gemäß der ersten Ausführungsform der vorliegenden Erfindung.

### Mit Blick auf die Fig. 1:

Der Aktuator 1 gemäß der vorliegenden Ausführungsform weist einen Deckel 15, eine Platine 16, einen Rotor 2 mit Rotor-Magneten 24, insgesamt drei Kugellager 20, 36 ein Antriebsritzel 17, drei Planetenräder 18, einen Planetenträger 19, einen Stator 3, ein Hohlrad 22, ein Schieberelement 5 mit einer Zahnstange 12, einen Gerätestecker 23 sowie ein Gehäuse 14 mit einer Öffnung 25 auf. Die Kugellager 20, 36 umfassen ein Gegenlager 20 für die Zahnstange 12 (siehe nachstehende Beschreibung und Fig. 2) sowie zwei Ritzellager 36.

In der vorliegenden Ausführungsform bilden der Rotor 2 und der Stator 3 eine Radialflussmaschine, in welcher der Rotor 2 bezüglich einer Radialrichtung 6 innerhalb des Stators 3 angeordnet ist. Die Fig. 1 ist eine vereinfachte Explosionsdarstellung. Wie ein Vergleich mit Fig. 2 zeigt ist der Rotor 2 im zusammengebauten Zustand axial zwischen der Zahnstange 12 und dem Hohlrad 22 angeordnet. In den Figuren ist eine einzige beispielhafte Radialrichtung 6 dargestellt. In diesem Zusammenhang ist "Radialrichtung" als jede Richtung zu verstehen, welche mit Bezug auf den Stator 3 von innen nach außen verläuft. Da (unendlich) viele Radialrichtungen 6 in diesem Sinne existieren, wird hierin der unbestimmte Artikel "eine Radialrichtung" verwendet.

Der Stator 3 weist eine Aussparung 4 auf. Der Stator 3 weist eine schlitzringförmige Ausgestaltung aus. Mit anderen Worten weist der Stator 3 eine im Wesentlichen ringförmige Form mit einer schlitzförmigen Aussparung 4 auf. Im zusammengebauten Zustand (siehe Fig. 2 und Fig. 3) ragt das Schieberelement 5 entlang einer Radialrichtung 6 des Stators 3 durch die Aussparung 4. Mit anderen Worten ragt das Schieberelement 5 von innen nach außen des Stators 3. Wie nachstehend beschrieben wird, führt das Schieberelement 5 einen Hub entlang einer Radialrichtung 6 aus. Dabei führt das Schieberelement 5 in dieser Ausführungsform eine Hin- und Herbewegung 34 parallel zu einer Radialrichtung 6 aus. Das Schieberelement 5 ragt durch die Öffnung 25 des Gehäuses 14.

Der Gerätestecker 23 ist elektrisch mit der Platine 16 verbunden, welche wiederrum elektrisch mit dem Stator 3 verbunden ist. Der Stator 3 wird mittels des Gerätesteckers 23 und mittels der Platine 16 angesteuert und führt den Rotor-Magneten 24 des Rotors 2 ein Magnetfeld zu. Damit bewirkt der Stator 3 mittels der Rotor-Magnete 24 eine Rotation des Rotors 2 entlang einer Rotationsachse 7 des Rotors 2. Die Rotation des Rotors 2 wird mittels eines Planetengetriebes 21 in eine Rotation des Antriebsritzels 17 umgesetzt. Hierfür weist das Planetengetriebe 21 die Planetenräder 18, den Planetenträger 19 sowie das Hohlrad 22 zusätzlich zum Antriebsritzel 17 auf. Das Antriebsritzel 17 ist mittels der Ritzellager 36 gelagert.

Der Rotor 2 weist außerdem, wie aus Fig. 2 ersichtlich, ein Rotor-Zahnrad 11 auf. Dabei ist der Rotor 2 im Wesentlichen ein halb-geschlossener Hohlzylinder, an dessen Außenumfangsfläche 26 die Rotor-Magnete 24 befestigt sind. Die Außenumfangsfläche 26 des Rotors 2 bildet eine Außenmantelfläche des hohlzylindrischen Rotors 2. Des Weiteren, gegeben durch die halb-geschlossene Form, weist der Rotor 2 eine Deckelfläche 8 auf, auf deren Innenseite 9, welche in Fig. 2 dargestellt ist, der Rotor 2 das Rotor-Zahnrad 11 aufweist. Das Rotor-Zahnrad 11 ist vorliegend einteilig, insbesondere einstückig, mit dem Rotor 2 gebildet.

Eine Rotation des Rotors 2 bewirkt somit eine Rotation des Rotor-Zahnrads 11. Das Rotor-Zahnrad 11 bewirkt weiter eine Drehung der Planetenräder 18, welche auf dem Planetenträger 19 innerhalb des Hohlrades 22 gelagert sind. Das Hohlrad 22 ist in der vorliegenden Ausführungsform fest, also wird nicht gedreht. Stattdessen umlaufen die Planetenräder 18 das Hohlrad 22, während das Rotor-Zahnrad 11 als drehbares Sonnenrad des Planetengetriebes 21 fungiert. Das Umlaufen der Planetenräder 18 bewirkt weiter eine Drehung des Planetenträgers 19, wodurch das mit dem Planetenträger 19 verbundene Antriebsritzel 17 gedreht wird.

Das Antriebsritzel 17 ist direkt mit der Zahnstange 12 des Schieberelements 5 verbunden, sodass das Schieberelement 5 bei einer Drehung des Antriebsritzels 17 einen Hub ausführt. Die Zahnstange 12 des Schieberelements 5 ist mittels des Gegenlagers 20 (siehe insbesondere Fig. 3) gelagert und gegen das Antriebsritzel 17 gepresst. Die Zahnstange 12 des Schieberelements 5 ist insbesondere ein einteiliger, insbesondere einstückiger, Abschnitt des Schieberelements 5.

Dabei ist ein maximaler negativer Hub, welcher entlang und entgegengesetzt einer Radialrichtung 6 (also von außen nach innen des Stators 3) von der Aussparung 4 zur gegenüberliegenden Seite 27 (der Aussparung 4 gegenüberliegend) verläuft, derart vordefiniert, dass die Zahnstange 12 nicht an der gegenüberliegenden Seite 27 anstößt. Beispielsweise ist der maximale negative Hub derart vordefiniert, dass dieser bis zu 90% der Strecke von einem Statormittelpunkt 35 (Mittelpunkt des Antriebsritzels 17) bis zur gegenüberliegenden Seite 27 beträgt.

In einem besonderen Beispiel ist die Hubbewegung 34 auf ± 12,5 mm vordefiniert, sodass ein gesamter Hub 25 mm beträgt. Das Schieberelement 5 ist beispielsweise 20 mm dick. In weiter vorteilhaften Ausführungen ist die Hubbewegung 34 asymmetrisch. Dabei kann die Hubbewegung 34 beispielsweise auf +10 mm / - 5 mm vordefiniert sein. "+" bedeutet hierbei, dass die Zahnstange 12 den Stator 12 verlässt (links in Fig. 1 - 3) und "-" bedeutet hierbei, dass die Zahnstange 12 in den Stator 12 eingezogen wird (rechts in Fig. 1 - 3).

Alternativ dazu, wie anhand der gestrichelten Linie in Fig. 3 ersichtlich, kann der Stator 2 an der gegenüberliegenden Seite 27 eine zweite Aussparung 38 aufweisen. Dadurch kann die Zahnstange 12 weiter als der vorstehend erläuterte maximale negative Hub bewegt werden, beispielsweise bis zu oder mehr als 100% der Strecke von dem Statormittelpunkt 35 bis zur gegenüberliegenden Seite 27, also bis zur zweiten Aussparung 38 oder durch die zweite Aussparung 38 und beispielsweise noch weiter.

Dadurch, dass der Stator 3 die Aussparung 4 aufweist, kann ein Großteil des Schieberelements 5 in dem Stator 3 aufgenommen werden, sodass eine Baugröße des Aktuators 1 klein gehalten werden kann.

Außerdem ist ersichtlich, dass der Stator 3 durch die Aussparung 4 bezüglich der Rotationsachse 7 des Rotors 2 rotations-asymmetrisch ausgestaltet ist. Der Rotor 2 ist bezüglich seiner Rotationsachse 7 rotationssymmetrisch.

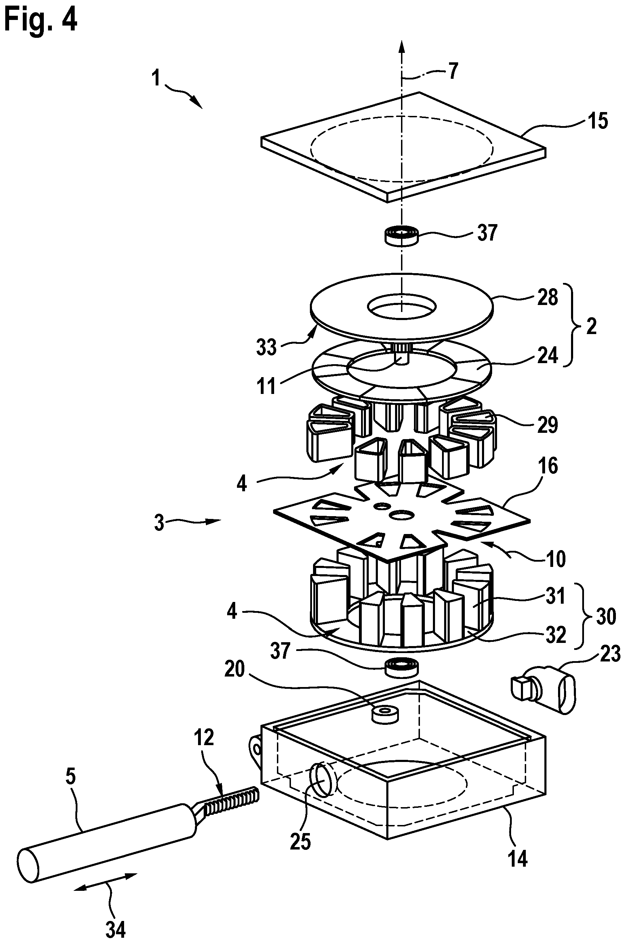

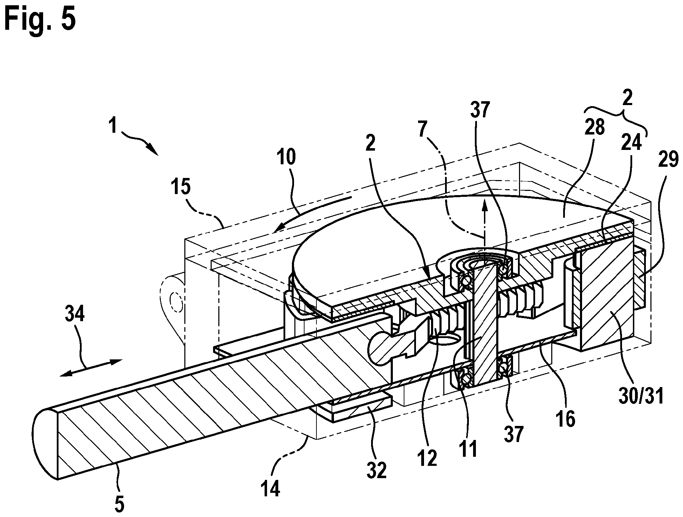

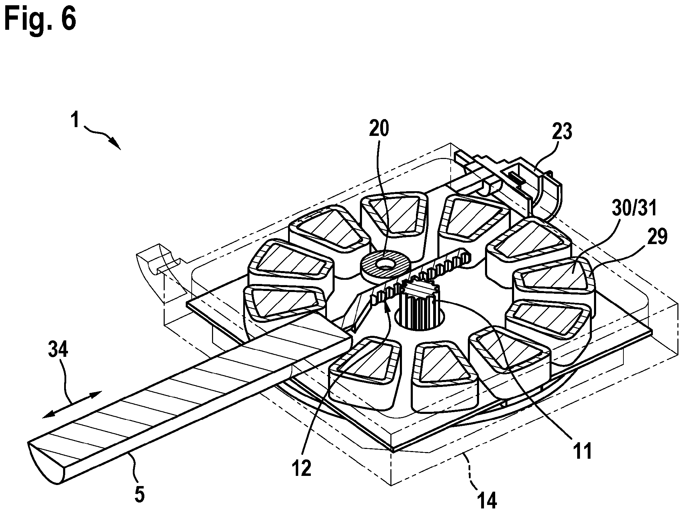

Nachfolgend wird mit Bezug auf die Figuren 4 bis 6 eine zweite Ausführungsform der vorliegenden Erfindung erläutert. Dabei werden möglicherweise Erläuterungen zu gleichen Elementen aus der ersten Ausführungsform weggelassen bzw. nicht wiederholt. Fig. 4 zeigt eine Explosionsdarstellung eines elektromechanischen Aktuators 1 gemäß einer zweiten Ausführungsform der vorliegenden Erfindung. Fig. 5 zeigt eine perspektivische Schnittansicht des elektromechanischen Aktuators 1 gemäß der zweiten Ausführungsform der vorliegenden Erfindung und Fig. 6 zeigt eine weitere perspektivische Schnittansicht des elektromechanischen Aktuators 1 gemäß der zweiten Ausführungsform der vorliegenden Erfindung. In Fig. 6 sind zur einfachen Darstellung der Rotor 2 und der Deckel 15 weggelassen, bzw. der Aktuator 1 ist entsprechend geschnitten dargestellt.

In der vorliegenden Ausführungsform bilden der Rotor 2 und der Stator 3 eine Axialflussmaschine. Dabei ist der Rotor 2 entlang seiner Rotationsachse 7 auf dem Stator 3 bzw. oberhalb des Stators 3 angeordnet.

Hierfür weist der Rotor 2 einen Eisenkern 28 auf, welcher im Wesentlichen scheibenförmig ist und einteilig, insbesondere einstückig, das Rotor-Zahnrad 11 aufweist. Das Rotor-Zahnrad 11 der vorliegenden Ausführungsform hat im Wesentlichen eine ähnliche Form wie das Antriebsritzel 17 in der ersten Ausführungsform. Dabei ragt das Rotor-Zahnrad 11 entlang der Rotationsachse 7 des Rotors 2 von einer dem Stator gegenüberliegenden Fläche 33 in einen von dem Stator 3 umfänglich teilweise umschlossenen Raum, um die in diesen Stator-Raum durch die Aussparung 4 ragende Zahnstange 12 des Schieberelements 5 zu erreichen.

Des Weiteren weist der Rotor 2, wie aus Fig. 4 ersichtlich, auf einer dem Stator 3 bezüglich seiner Rotationsachse 7 (bezüglich einer Longitudinalrichtung des Stators 3) gegenüberliegenden Fläche 33 eine ringförmige Anordnung von Rotor-Magneten 24 auf. Die Rotor-Magnete 24 sind dabei vorteilhafterweise ringplatten-förmig ausgestaltet, also als bezüglich der Rotationsachse 7 dünner Ring ausgebildet. Diese Ausgestaltung hat den besonderen Vorteil, dass eine Baugröße des Aktuators 1 insbesondere senkrecht zur Rotationsachse 7 (senkrecht zur Longitudinalrichtung, also Länge und Breite) verringert werden kann. Alternativ zur ringplatten-förmigen Ausgestaltung der Rotor-Magnete 24 kann der Rotor 2 ein Speichendesign von Rotormagneten aufweisen, wobei der Rotor 2 als Rotorpaket mit eingesetzten/vergrabenen Permanentmagneten ausgestaltet ist.

Der Stator 3 weist eine Statorwicklung 29, einen Statoreisenkreis 30 und die Platine 16 auf, wobei die Platine 16 in der vorliegenden Ausführungsform (vergleiche Fig. 5) zwischen der Statorwicklung 29 und dem Statoreisenkreis 30 angeordnet ist. Genauer weist der Statoreisenkreis 30 eine, im vorliegenden Beispiel ringförmige, Grundplatte 32 und eine Vielzahl von Statorzähnen 31 auf, welche sich entlang der Rotationsachse 7 des Rotors 2 senkrecht von der Grundplatte 32 in Richtung Rotor 2 erstrecken. Die Statorwicklung 29 umwickelt die Statorzähne 31. Die Platine 16 ist entlang der Rotationsachse 7 zwischen der Grundplatte 32 und der Statorwicklung 29 angeordnet und mit der Statorwicklung 29 zum Ansteuern und Bestromen dieser elektrisch verbunden.

Der Stator 3 weist auch in dieser Ausführungsform die Aussparung 4 auf. In der vorliegenden Ausführungsform ist die Aussparung 4 dadurch gebildet, dass in dem Stator 3 zumindest ein Statorzahn 31 ausgelassen wird. Hierin ist genau ein Statorzahn 31 ausgelassen. Die Statorzähne 31 sind, mit Ausnahme der Aussparung 4, gleichmäßig entlang der Umfangsrichtung 10 des Stators 3 verteilt. Wie vorstehend mit Bezug auf die erste Ausführungsform beschrieben kann der Stator 3 auch in der vorliegenden Ausführungsform eine Mehrzahl, insbesondere zwei, besonders bevorzugt zwei gegenüberliegende, von Aussparungen 4 aufweisen. Dabei können diese zusätzlichen Aussparungen 4 durch auslassen von weiteren Statorzähnen 31 gebildet sein.

Des Weiteren ist an der entsprechenden Stelle der Aussparung 4 keine Statorwicklung 29 gebildet. Die Grundplatte 32 ist an der Stelle der Aussparung 4 durchgängig gebildet, also nicht unterbrochen. Die Platine 16 ist an der Stelle der Aussparung 4 ebenfalls durchgängig gebildet, also nicht unterbrochen. Der Stator 3 der vorliegenden Ausführungsform, insbesondere der Statoreisenkreis 30 des Stators, ist somit ebenfalls rotations-asymmetrisch mit Bezug auf die Rotationsachse 7 des Rotors 2 ausgestaltet, während der Rotor 2 bezüglich seiner Rotationsachse 7 rotationssymmetrisch ist.

Das Schieberelement 5 ragt somit entlang einer Radialrichtung 6 durch die Aussparung 4 des Stators, gebildet durch eine Auslassung eines Statorzahnes 31 und eines entsprechenden Teils der Statorwicklung 29.

Der Stator 3 bewirkt mittels der Statorwicklung 29 und den Rotor-Magneten 24 eine Rotation des Rotors 2. Rotorlager 37 lagern den Rotor 2 bezüglich des Gehäuses 14 und bezüglich des Deckels 15. Die Rotation des Rotors 2 wird durch das Rotor-Zahnrad 11 direkt in eine Hubbewegung (Hin- und Herbewegung entlang einer Radialrichtung 6) 34 des Schieberelements 5 mittels der ineindergreifenden Zähne des Rotor-Zahnrads 11 und der Zahnstange 12 des Schieberelements 5 umgesetzt. Die Zahnstange 12 des Schieberelements 5 ist, wie in Fig. 6 ersichtlich, mittels des Gegenlagers 20 gelagert und gegen das Rotor-Zahnrad 11 gepresst. Wie aus Fig. 6 ersichtlich ist die Zahnstange 12 hierbei derart ausgebildet, dass das Schieberelement 5 entlang einer Radialrichtung, insbesondere koaxial mit einer Radialrichtung, angeordnet ist.

Dadurch ist eine besonders kompakte Bauform des Aktuators 1 ermöglicht. Des Weiteren wird hierdurch ermöglicht, dass der Aktuator 1 auch für höhere Anforderungen, beispielsweise höherer Kräfte durch das Schieberelement 5 oder für längere Schieberelemente 5, besser skalierbar ist. Mit anderen Worten kann der Aktuator 1 auch für höhere Anforderungen bereitgestellt werden, ohne dass dabei eine Baugröße dessen übermäßig zunimmt.

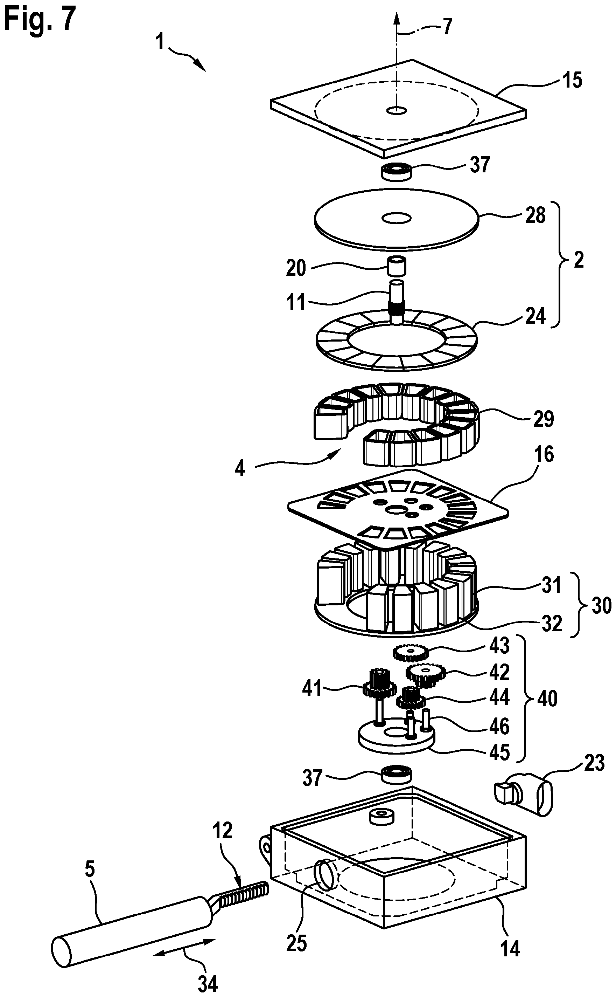

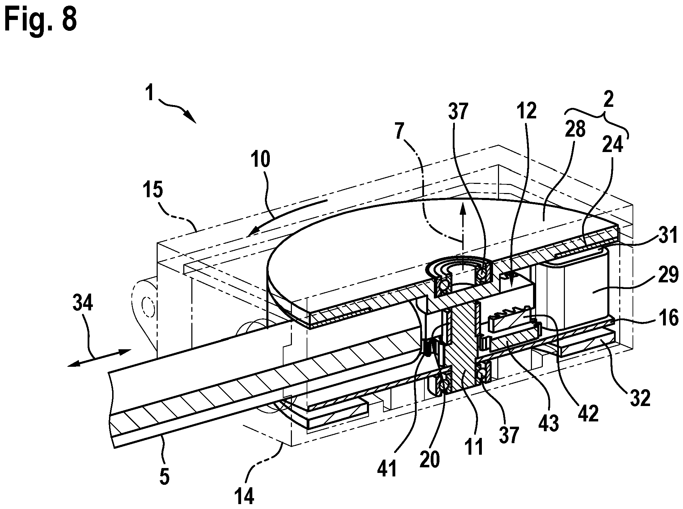

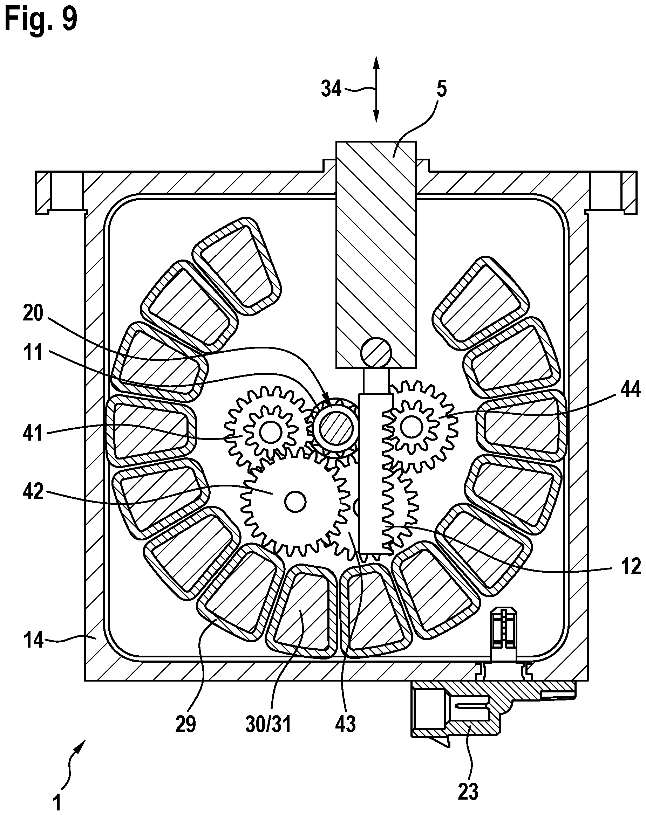

Nachfolgend wird mit Bezug auf die Figuren 7 bis 9 eine dritte Ausführungsform der vorliegenden Erfindung erläutert. Dabei werden möglicherweise Erläuterungen zu gleichen Elementen aus der ersten oder der zweiten Ausführungsform weggelassen bzw. nicht wiederholt. Fig. 7 zeigt eine Explosionsdarstellung eines elektromechanischen Aktuators 1 gemäß einer dritten Ausführungsform der vorliegenden Erfindung. Fig. 8 zeigt eine perspektivische Schnittansicht des elektromechanischen Aktuators 1 gemäß der dritten Ausführungsform der vorliegenden Erfindung und Fig. 9 zeigt eine Schnittansicht des elektromechanischen Aktuators 1 gemäß der dritten Ausführungsform der vorliegenden Erfindung. In Fig. 9 sind zur einfachen Darstellung der Rotor 2 und der Deckel 15 weggelassen, bzw. der Aktuator 1 ist entsprechend geschnitten dargestellt.

In der vorliegenden Ausführungsform, ähnlich der zweiten Ausführungsform, bilden der Rotor 2 und der Stator 3 eine Axialflussmaschine. Dabei ist der Rotor 2 entlang seiner Rotationsachse 7 auf dem Stator 3 bzw. oberhalb des Stators 3 angeordnet.

Des Weiteren weist der elektromechanische Aktuator 1 gemäß der vorliegenden Ausführungsform ein Stirnradgetriebe 40 auf, welches nachstehend mit Bezug auf die Figuren 7 bis 9 erläutert wird. Das Stirnradgetriebe 40 ist in der vorliegenden Ausführungsform mehrstufig.

Das Stirnradgetriebe 40 weist, wie insbesondere aus der Fig. 7 ersichtlich, einen Stirnradgetriebe-Träger 45 auf. Auf diesem Träger 45 sind jeweils vier Stirnräder 41 - 44 auf entsprechende Zapfen 46 gelagert. Das Stirnradgetriebe 40 ist, wie auch in Fig. 8 ersichtlich, im vom Stator 3 teilweise (aufgrund der Aussparung 4) umschlossenen Raum aufgenommen.

Wie auch in den vorstehenden Ausführungsformen ragt das Schieberelement 5 in dieser Ausführungsform entlang einer Radialrichtung des Stators 3 durch die Aussparung 4. In der vorliegenden Ausführungsform ist dabei das Schieberelement 5 parallel zu einer Radialrichtung des Stators 3 ausgerichtet und angeordnet.

Mit Bezug auf die Figuren 8 und 9 wird nachfolgend eine Funktionsweise des Stirnradgetriebes 40 erläutert. Aufgrund der perspektivischen Schnittdarstellung der Fig. 8 ist das (nachfolgend weiter erläuterte) vierte Stirnrad 44 nicht sichtbar.

Die Zahnstange 12 des Schieberelements 5 ist mittels des Gegenlagers 20 gelagert und gegen das Rotor-Zahnrad 11 gepresst.

Der Stator 3 bewirkt, wie vorstehend erläutert, eine Rotation des Rotors 2, wobei Rotorlager 37 den Rotor 2 bezüglich des Gehäuses 14 und des Deckels 15 lagern. Die Rotation des Rotors 2 wird durch das Rotor-Zahnrad 11 an das Stirnradgetriebe 40 und dadurch an das Schieberelement 5 wie folgt erläutert übertragen.

Das Rotor-Zahnrad 11 greift in ein erstes Stirnrad 41, hier in einen größeren Außenumfang (vergleiche mit Fig. 7), wodurch das erste Stirnrad 41 rotiert wird. Das erste Stirnrad 41 greift, hier mit einem geringeren Außenumfang, in ein zweites Stirnrad 42, welches somit rotiert wird. Das zweite Stirnrad 42, hier mit einem geringeren Außenumfang, greift in ein drittes Stirnrad 43, welches somit ebenfalls rotiert wird. Das dritte Stirnrad 43 greift, vorliegend mit demselben Außenumfang, in ein viertes Stirnrad 44. Das erste Stirnrad 41, das zweite Stirnrad 42 und das vierte Stirnrad 44 sind Doppelzahnräder, während das dritte Stirnrad 43 ein einfaches Zahnrad ist.

Das vierte Stirnrad 44 greift mit seinem geringeren Außenumfang direkt in die Zahnstange 12 des Schieberelements 5. Somit wird eine Rotation des Rotors 2 mittels des Stirnradgetriebes 40 in eine Hubbewegung/Hin- und Herbewegung 34 des Schieberelements 5 umgesetzt.

Zusätzlich zu den vorstehend erläuterten Vorteilen bietet die vorliegende Axialflussmaschine mit Stirnradgetriebe 40 die folgenden Vorteile. Durch das mehrstufige Stirnradgetriebe 40 wird eine Anpassung der mechanischen Leistung in einen für den Aktuator 1 (bzw. Rotor 2, Stator 3) günstigeren Arbeitsbereich (höhere Drehzahl, niedrigeres Drehmoment) gebracht, wodurch eine Leistungsdichte dessen erhöht wird. Diese höhere Leistungsdichte bewirkt wiederrum, dass ein aktives Materialvolumen (bspw. umfassend Kupfer, Eisen, Magnete, etc.) verkleinert werden kann, sodass vorliegend das Stirnradgetriebe 40 im vorstehend erläuterten umschlossenen Raum angeordnet werden kann. Dadurch wird bei gleicher Leistung die Baugröße des Aktuators 1 verringert, wodurch ein breiterer Anwendungsbereich ermöglicht wird. Durch eine Verkleinerung des aktiven Materialvolumens, welches kostenintensiver als das Stirnradgetriebe 40 ist, werden Kosten für den Aktuator 1 verringert.

Insgesamt erzielt die vorliegende Ausführungsform eine vergleichsweise hohe Leistungsdichte bei kompakter Bauform und mit verringerten Kosten.

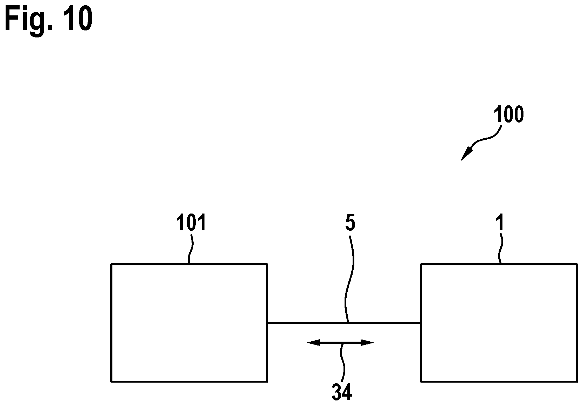

Fig. 10 zeigt ein schematisches Blockdiagramm einer Aktuator-Ventil-Einheit 100 gemäß einer Ausführungsform der vorliegenden Erfindung.

Die Aktuator-Ventil-Einheit 100 weist den Aktuator 1 gemäß der ersten Ausführungsform oder der zweiten Ausführungsform oder der dritten Ausführungsform auf. Des Weiteren weist die Aktuator-Ventil-Einheit ein Ventil 101 auf. Das Ventil 101 wird durch die Hubbewegung 34 des Schieberelements 5 des Aktuators 1 zumindest teilweise geschlossen und/oder geöffnet. Mit anderen Worten fungiert das Schieberelement 5 in der Aktuator-Ventil-Einheit 100 vorteilhafterweise als Ventilschieber.

Neben der vorstehenden schriftlichen Beschreibung der Erfindung wird zu deren ergänzender Offenbarung hiermit explizit auf die zeichnerische Darstellung der Erfindung in den Figuren Bezug genommen.

### Bezugszeichenliste

- 1: elektromechanischer Aktuator (Aktuator)
- 2: Rotor
- 3: Stator
- 4: Aussparung
- 5: Schieberelement
- 6: Radialrichtung
- 7: Rotationsachse
- 8: Deckelfläche
- 9: Innenseite
- 10: Umfangsrichtung
- 11: Rotor-Zahnrad
- 12: Zahnstange
- 14: Gehäuse
- 15: Deckel
- 16: Platine
- 17: Antriebsritzel
- 18: Planetenräder
- 19: Planetenträger
- 20: Gegenlager
- 21: Planetengetriebe
- 22: Hohlrad
- 23: Gerätestecker
- 24: Rotor-Magnete
- 25: Öffnung
- 26: Außenumfangsfläche
- 27: gegenüberliegende Seite
- 28: Eisenkern
- 29: Statorwicklung
- 30: Statoreisenkreis
- 31: Statorzahn
- 32: Grundplatte
- 33: gegenüberliegende Fläche
- 34: Hubbewegung/Hin- und Herbewegung
- 35: Statormittelpunkt
- 36: Ritzellager
- 37: Rotorlager
- 38: zweite Aussparung
- 40: Stirnradgetriebe
- 41: erstes Stirnrad
- 42: zweites Stirnrad
- 43: drittes Stirnrad
- 44: viertes Stirnrad
- 45: Stirnradgetriebe-Träger
- 46: Zapfen
- 100: Aktuator-Ventil-Einheit
- 101: Ventil

## Patentansprüche

1. Elektromechanischer Aktuator (1), aufweisend:
• einen Rotor (2);
• einen Stator (3), welcher eine Aussparung (4) aufweist; und
• zumindest ein Schieberelement (5), welches mit dem Rotor (2) wirkverbunden ist und durch eine Rotation des Rotors (2) bewegt wird, wobei
• das Schieberelement (5) im Betrieb und/oder Ruhezustand des Aktuators (1) entlang einer Radialrichtung (6) des Stators (3) zumindest teilweise in die Aussparung (4) ragt.

2. Elektromechanischer Aktuator (1) gemäß Anspruch 1, wobei der Stator (3) mit Bezug auf eine Rotationsachse (7) des Rotors (2) rotations-asymmetrisch ist.

3. Elektromechanischer Aktuator (1) gemäß einem der vorherigen Ansprüche, wobei der Rotor (2) mit Bezug auf seine Rotationsachse (7) rotationssymmetrisch ist.

4. Elektromechanischer Aktuator (1) gemäß einem der vorherigen Ansprüche, wobei der Stator (3) eine Mehrzahl von Statorzähnen (31) auf einer, insbesondere ringförmigen, Grundplatte (32) aufweist, wobei die Statorzähne (31) entlang einer Umfangsrichtung (10) des Stators (3) gleichmäßig verteilt sind und wobei der Stator (3) keinen Statorzahn (31) in der Aussparung (4) aufweist.

5. Elektromechanischer Aktuator (1) gemäß einem der vorherigen Ansprüche, wobei eine Verbindung zwischen dem Rotor (2) und dem Schieberelement (5) eingerichtet ist, eine Rotation des Rotors (2) im Betrieb des Aktuators (1) in eine Hin- und Herbewegung (34) des Schieberelements (5) entlang einer Radialrichtung (6) des Stators (3) durch die Aussparung (4) umzusetzen.

6. Elektromechanischer Aktuator (1) gemäß Anspruch 5, wobei der Rotor (2) ein Rotor-Zahnrad (11) aufweist und das Schieberelement (5) eine Zahnstange (12) aufweist, welche mit dem Rotor-Zahnrad (11) verbunden ist.

7. Elektromechanischer Aktuator (1) gemäß Anspruch 6, wobei die Zahnstange (12) des Schieberelements (5) mittels eines Planetengetriebes (21) oder mittels eines Stirnradgetriebes (40) mit dem Rotor-Zahnrad (11) verbunden ist.

8. Elektromechanischer Aktuator (1) gemäß einem der vorherigen Ansprüche, wobei der Rotor (2) und der Stator (3) eine Radialflussmaschine bilden, in welcher der Rotor (2) radial innerhalb des Stators (3) angeordnet ist.

9. Elektromechanischer Aktuator (1) gemäß einem der Ansprüche 1 bis 7, wobei der Rotor (2) und der Stator (3) eine Axialflussmaschine bilden, in welcher der Rotor (2) entlang seiner Rotationsachse (7) auf dem Stator (3) angeordnet ist.

10. Aktuator-Ventil-Einheit (100), aufweisend zumindest ein Ventil (101) und einen elektromechanischen Aktuator (1) gemäß einem der vorherigen Ansprüche, wobei das zumindest eine Schieberelement (5) des Aktuators (1) mit dem Ventil (101) verbunden ist.
